**Europäisches Patentamt**

**European Patent Office**

**Office européen des brevets**

(19)

(11) Veröffentlichungsnummer: **0 269 983**

**B1**

(12) **EUROPÄISCHE PATENTSCHRIFT**

(45) Veröffentlichungstag der Patentschrift: **16.01.91**

(21) Anmeldenummer: **87117354.8**

(22) Anmeldetag: **25.11.87**

(51) Int. Cl.⁵: **C 08 J 9/16,** C 08 L 25/00, C 08 K 5/09 // (C08L25/00, 71:02, 93:04)

(54) Expandierbare Styrolpolymerisate und Styrolpolymerisat-Schaumstoffe.

(30) Priorität: **29.11.86 DE 3640877**

(43) Veröffentlichungstag der Anmeldung: **08.06.88 Patentblatt 88/23**

(45) Bekanntmachung des Hinweises auf die Patenterteilung: **16.01.91 Patentblatt 91/03**

(84) Benannte Vertragsstaaten: **AT BE DE ES FR GB IT NL**

(56) Entgegenhaltungen: **DE-A-1 926 480** **US-A-3 503 908** **US-A-3 526 605**

Die Akte enthält technische Angaben, die nach dem Eingang der Anmeldung eingereicht wurden und die nicht in dieser Patentschrift enthalten sind.

(73) Patentinhaber: **BASF Aktiengesellschaft Carl-Bosch-Strasse 38 D-6700 Ludwigshafen (DE)**

(72) Erfinder: **Hahn, Klaus, Dr. Im Buegen 9 D-6719 Kirchheim (DE)** Erfinder: **De Grave, Isidoor, Dr. Mandelring 3 D-6706 Wachenheim (DE)**

EP 0 269 983 B1

**Beschreibung**

Die Erfindung betrifft Styrolpolymerisat-Schaumstoffe mit besonders gleichmäßiger und feinzelliger Schaumstruktur. Die Erfindung betrifft ferner expandierbare Styrolpolymerisate, die beim Aufschäumen besonders gleichmäßige und feinzellige Schaumstoffe liefern.

Die Herstellung von Styrolpolymerisat-Schaumstoffen ist bekannt. In der Technik geht man dabei so vor, daß in einer geeigneten Mischvorrichtung das geschmolzene Styrolpolymerisat mit dem Treibmittel unter Druck homogen vermischt und das Gemisch anschließend durch eine Duse ausgepreßt wird, wobei es zum Schaumstoff aufschäumt.

Nach einem anderen Verfahren der Technik wird zunächst ein expandierbares, d.h. ein Treibmittel enthaltendes, Styrolpolymerisat in Partikelform hergestellt und, dass dann durch Erhitzen auf Temperaturen oberhalb des Erweichungspunkts zu einem Haufwerk von Schaumstoffpartikeln aufgeschäumt wird. Die Schaumstoffpartikel werden anschließend durch erneutes Erhitzen in einer perforierten druckfesten Form mit Heißdampf weiter aufgeschäumt, wobei sie zu einem Schaumstoff-Formkörper verschweißen.

Die Schaumstruktur der bekannten Styrolpolymerisat-Schaumstoffe ist beträchtlichen Schwankungen unterworfen. Das gezielte Einstellen gewünschter Zellzahlen war bisher nur in einem engen Rahmen möglich. Insbesondere konnte bisher eine gleichmäßige feinzellige Schaumstruktur nicht befriedigend verwirklicht werden.

Diese Aufgabe wird nun gelöst durch den Zusatz einer geringen Menge eines Gemisches aus Harzsäuren oder deren niederen Alkylester oder (Hydro)abietylphthalat und einem Polyoxyethylenmonoester oder -monoether.

Gegenstand der Erfindung sind demgemäß expandierbare Styrolpolymerisate, enthaltend

(a) 3 bis 15 Gew.% eines $C_3$—$C_8$-Kohlenwasserstoffs oder eines Halogenalkans als Triebmittel,

(b) 0,005 bis 0,3 Gew.% Harzsäuren, eines niederen Alkylesters der Harzsäuren oder (Hydro)abietyl-phthalat,

(c) 0,001 bis 0,1 Gew.% eines Polyoxyethylen-mooesters oder -monoethers, und

(d) gegebenenfalls übliche weitere Zusatzstoffe.

Gegenstand der Erfindung sind weiterhin Styrolpolymerisat-Schaumstoffe der dichte 0,01 bis 0,05 g/ $cm^3$, enthaltend

(a) 0,005 bis 0,3 Gew.% Harzsäuren, eines niederen Alkylesters der Harzsäuren oder (Hydro)abietyl-phthalat,

(b) 0,001 bis 0,1 Gew.% eines Polyoxyethylen-monoesters oder -monoethers, und

(c) gegebenenfalls übliche Zusatzstoffe.

Aus der US—PS 3 526 605 ist bekannt, bei der Herstellung von expandierbaren Styrolpolymerisaten 0,5 bis 2,5 Gew.-% Harzsäuren, wie (Hydro)abietinsäure oder deren niedere Alkylester oder (Hydro)abiethylphthalat mitzuverwenden. Die Produkte zeichnen sich durch eine außerordentlich niedrige Formtemperatur bei der Verarbeitung zu Schaumstoffen aus. Die Schaumstoffe haben dadurch bedingt auch den Nachteil einer zu niedrigen Wärmeformbeständigkeit. Auch ihre Schaumstruktur ist unbefriedigend.

Aus der US—PS 3 503 908 ist bekannt, daß durch den Zusatz von 0,15 bis 0,28 Gew.% eines Polyoxyethylenmonoesters oder -monoethers bei der Herstellung von expandierbaren Styrolpolymerisaten die Formkühlzeit verkürzt wird, wenn daraus Schaumstoff-Formkörper hergestellt werden. Die Verwendung dieser Zusatzstoffe führt jedoch zu Störungen der Suspensionsstabilität und Koagulationen bei der Herstellung der expandierbaren Styrolpolymerisate. Zudem ist auch die Schaumstruktur der erhaltenen Schaumstoffe ungleichmäßig.

Überraschenderweise treten die Nachteile, die bei der Mitverwendung von Harzsäuren oder deren niederen Alkylester bzw. von Polyoxyethylen-monoestern oder -monoethern beobachtet werden, nicht auf, wenn man gemäß vorliegender Erfindung eine Kombination der beiden Zusatzstoffe verwendet. Völlig überraschend ist auch, daß die erfindungsgemäßen Schaumstoffe sich durch eine völlig gleichmäßige, in der Zellzahl einstellbare Struktur auszeichnen, wie durch die Beispiele und Vergleichsbeispiel im einzelnen belegt ist.

Styrolpolymerisate im Sinne der Erfindung sind Polystyrol und Mischpolymerisate des Styrols mit anderen α,β-olefinisch ungesättigten Verbindungen, die mindestens 50 Gew.-Teile Styrol einpolymerisiert enthalten. Als Mischpolymerisationskomponenten kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat. Geeignet sind auch Mischpolymerisate und Pfropfplymerisate von 40 bis 90 Gew.-% Polystyrol und 10 bis 60 Gew.% Polyethylen bzw. Polypropylen.

Die expandierbaren Styrolpolymerisate werden nach den üblichen Verfahren hergestellt. Sie können in Perlform, in Form zylindrischr Granulate oder in Form von Brocken vorliegen, wie sie beim Mahlen von Substanzpolymerisaten erhalten werden. Die Teilchen haben vorteilhaft Durchmesser von 0,1 bis 6 mm, insbesondere von 0,4 bis 3 mm.

Die Styrolpolymerisate enthalten in homogener Verteilung ein oder mehrere Treibmittel. Als

2

Triebmittel eignen sich z.B. unter Normalbedingungen gasförmige oder flüssige $C_3$—$C_8$-Kohlenwasserstoffe oder Halogenkohlenwasserstoffe, die das Styrolpolymerisat nicht lösen und deren Siedepunkt unter dem Erweichungspunkt des Polymerisats liegt. Geeignete Triebmittel sind z.B. Propan, Butan, Pentan, Cyclopentan, Hexan, Cyclohexan, Octan, Dichlordifluormethan und Trifluorchlormethan. Die Treibmittel sind in den Styrolpolymerisaten in Mengen zwischen 3 und 15 Gew.%, bezogen auf das Polymerisat, enthalten.

Wesentliches Merkmal der Erfindung ist, daß die expandierbaren Styrolpolymerisate bzw. die Styrolpolymerisat-Schaumstoffe als einen Zusatzstoff Harzsäuren, wie Abietinsäure, Hydroabietinsäure oder deren Isomeren, niedere Alkylester der Harzsäuren, beispielsweise den Methyl-, Ethyl-, Propyl-, Isopropyl, n-, i- oder tert.-Butylester, Abiethylphthalat oder Hydroabietylphthalat enthalten. Auch Gemische dieser Stoffe sind verwendbar. Der Zusatzstoff wird in Mengen von 0,005 bis 0,3 Gew.%, vorzugsweise 0,01 bis 0,1 Gew.%, bezogen auf das Styrolpolymerisat, verwendet. Gut geeignet sind auch die technischen Harzsäuren, wie (Hydro)abietinsäuregemische und Naturstoffe, wie Kolophonium, die im wesentlichen aus diesen Stoffen bestehen.

Wesentliches Merkmal der Erfindung ist weiterhin, daß die expandierbaren Styrolpolymerisate bzw. Styrolpolymerisat-Schaumstoffe als weiteren Zusatzstoff einen Polyoxyethylenmonoester oder -monoether enthalten. Der Polyoxyethylenrest dieser Ester bzw. Ether enthält beispielsweise 3 bis 50, vorzugsweise 4 bis 30, insbesondere 5 bis 25 Oxyethyleneinheiten. Die Ester bzw. Ether leiten sich vorzugsweise von langkettigen Carbonsäuren bzw. Alkoholen ab, insbesondere solche mit 6 bis 40, vorzugsweise 6 bis 20 Kohlenstoffatomen.

Geeignete Stoffe sind beispielsweise Polyoxyethylensorbitan-monolaurat, Polyoxyethylensorbitanmonooleat, Polyoxyethylen-sobitan-monopalmitat, Polyoxyethylen-monolaurat, Polyoxyethylenmonostearat, Polyoxyethylen-monolaurylether, Polyoxyethylen-monocetylether und Monooxyethylenmonooleylether. Die Stoffe werden in Mengen von 0,001 bis 0,1 Gew.%, vorzugsweise 0,005 bis 0,1 Gew.%, bezogen auf das Styrolpolymerisat, verwendet.

Gut geeignet sind auch Oxyethylierungsprodukte von technischen Alkoholen, wie Palmfettalkohol.

Die expandierbaren Styrolpolymerisate bzw. die Styrolpolymerisat-Schaumstoffe können auch übliche Zusätze an anderen Stoffen enthalten, die den Produkten bestimmte Eigenschaften verleihen.

Genannt seien beispielsweise Flammschutzmittel auf Basis von organischen Brom- oder Chlorverbindungen, wie Trisdibromopropylphosphat, Hexabromcyclododecan, Chlorparaffin sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Magnesiumstearat, Melaminformaldehydkonensate oder Kieselsäure. Die Zusatzstoffe können je nach der beabsichtigten Wirkung in den Teilchen homogen verteilt oder als Oberflächenbeschichtung vorliegen.

Die expandierbaren Styrolpolymerisate bzw. die Schaumstoffe können beispielsweise noch herkömmliche Mittel zur Verkürzung der Entformzeit beispielsweise Glycerinester, wie Glycerindistearylether, als Beschichtung enthalten. Besonders günstig sind Mischung von Hydroxycarbonsäureestern mit Glycerinestern im Gewichtsverhältnis 5:1 bis 1:5.

Die Ester befinden sich, zumindest zum überweigenden Teil als Überzug auf der Oberfläche der expandierbaren Polystyrolpartikel, in einer möglichst gleichmäßigen Verteilung. Die Art der Auftragung ist nicht kritisch, sie kann z.B. durch einfaches Auftrommeln des feinteiligen Esters auf die Styrolpolymerisatteilchen in handelsüblichen Mischern erfolgen. Es ist jedoch auch möglich, den Ester aus einer wäßrigen Dispersin oder einer Lösung in einem organischen Lösungsmittel aufzutragen, wobei das Lösungsmittel bzw. das Wasser beim Auftragen entfernt werden muß. Ferner können die Ester auch am Ende oder gegen Ende der Suspensionpolymerisation zu dem Ansatz der Styrolpolymerisation hinzugefügt werden.

Die Herstellung der expandierbaren Styrolpolymerisate erfolgt nach bekannten Methoden beispielsweise durch Vermischen der Styrolpolymerisate mit dem Triebmittel und den Zusatzstoffen in einer Mischvorrichtung, z.B. einem Extruder, Preßt man die Schmelze in eine Zone verminderten Drucks aus und kühlt man sie sofort ab, so daß das Extrudat nicht aufschäumt, so erhält man ein expandierbares Styrolpolymerisat. Die Masse kann aber auch unmittelbar nach dem Austritt aus der Mischvorrichtung zum Schaumstoff aufgeschäumt werden. Für die Herstellung von expandierbaren Produkten kann man aber auch das Styrolpolymerisat in Granulat- oder Perlenform in wäßriger Suspension bei erhöhter Temperatur mit dem Triebmittel und den Zusatzstoffen imprägnieren.

Vorteilhaft stellt man die expandierbaren Styrolpolymerisate durch Polymerisation des monomeren Styrols in wäßriger Dispersion in Gegenwart des Treibmittels und der Zusatzstoffe her. Sie liegen nach der Herstellung in feinteiliger Form vor, z.B. in Perlform, und haben im allgemeinen einen Teilchendurchmesser von 0,1 bis 6 mm, vorzugsweise 0,4 bis 3 mm. Sie werden nach den üblichen Verfahren in vorgeschäumten Zustand durch Erhitzen in Formen, welche nicht gasdicht schließen, weiter aufgeschäumt und zu Schaumstofformkörpern versintert, die in ihren Ausmaßen dem Innenhohlraum der verwendeten Form entsprechen.

Beispiele

A) Nachimprägnierversuche

In einem druckfesten Rührkessel wurden 100 Teile vollentsalztes Wasser, 3 Teile Tricalciumphosphat, 0,02 Teile Dodecylbenzol-Natriumsulfonat, 1 Teil Natriumchlorid, 150 Teile Polystyrolperlen, 6,4 Teile n-Pentan und die in der Tabelle angegebenen Zusatzstoffe vorgelegt. Das Gemisch wurde unter Rühren innerhalb von 2 Stunden auf 110°C erhitzt und bei dieser Temperatur 6 Stunden gehalten. Nach dem Abkühlen wurde durch Salzsäurezusatz der pH-Wert auf 1,4 eingestellt. Die Perlen wurden abzentrifugiert, mit Wasser gewaschen und mit einem Luftstrom getrocknet.

B) Polymerisationsversuche

In einem druckfesten Rührkessel aus korrosionsfreiem Stahl wurde eine Mischung aus 150 Teilen vollentsalztem Wasser, 0,1 Teilen Natriumpyrophosphat, 100 Teile Styrol, 7 Teilen Pentan, 0,45 Teilen Benzoylperoxid, 0,15 Teilen tert.-Butyl-perbenzoat sowie die in der Tabelle angegebenen Teile der Zusatzstoffe unter Rühren auf 90°C erhitzt.

Nach 2 Stunden bei 90°C wurden 4 Teile einer 10 %igen Lösung von Polyvinylpyrrolidon zugegeben. Dann wurde weitere 2 Stunden bei 90°C, anschließend 2 Stunden bei 100°C und schließlich 2 Stunden bei 120°C gerührt.

Das erhaltene Granulat mit einem mitteleren Teilchendurchmesser von 1,1 mm wurde isoliert, gewachen und getrocknet.

C) Herstellung von Schaumstoffen

Die triebmittelhaltigen Polystyrolgranulate aus A und B mit Perlfraktionen zwischen 0,7 und 1,2 mm wurden durch Auftrommeln im Schaufelmischer (Typ Lödige) mit 0,3 Gew.% Glycerinmonostearat beschichtet. Durch Einwirkung von strömendem Wasserdampf wurden die Polystyrolteilchen in einem kontinuierlichen Rührvorschäumer (Typ Rauscher) auf ein Schüttgewicht von 20 g/l vorgeschäumt, 24 Stunden zwischengelagert und anschließend in einem Formteilautomaten (Typ Hofstetter) durch Bedampfung mit einem Druck von 2,1 bar zu einem quaderförmigen Schaumstoffkörper verschweißt. Die Verschweißungen wurden nach der im US 3 526 605 beschriebene Methode bestimmt.

Die erhaltenen Ergebnisse sind in den Tabellen zusammengestellt. Die in den Beispielen genannten Teile sind Gewichtsteile.

TABELLE 1

Nachimprägnierversuche

Versuch Nr.

| Zusatzstoff (%) | 1 | 2 | 3 | 4 | 5 | 6 | 7 | 8 | 9 | 10 | 11[2) | 12[2) | 13 | 14 | 15 | 16 | 17 |
|---|---|---|---|---|---|---|---|---|---|---|---|---|---|---|---|---|---|
| Abietinsäure | — | 0,1 | 0,5 | 0,8 | 1,5 | — | — | — | — | — | — | — | — | — | — | — | — |
| Hydroabietinsäure | — | — | — | — | — | 1,5 | — | — | — | — | — | — | — | — | — | — | — |
| Kolophonium· nach DIN 55 935 | — | — | — | — | — | — | 1,5 | — | — | — | — | — | — | — | — | — | — |
| technisches Hydro-abitinsäuregemisch | — | — | — | — | — | — | — | 1,5 | — | — | — | — | — | — | — | 0,01 | 0,01 |
| Talgfettalkohol× 25 Ethlenoxid | — | — | — | — | — | — | — | — | 0,05 | 0,1 | 0,2 | — | — | — | — | — | — |
| Talgfettalkohol× 11 Ethylenoxid | — | — | — | — | — | — | — | — | — | — | — | 0,2 | — | — | — | — | — |
| Talgfettalkohol× 50 Ethylenoxid | — | — | — | — | — | — | — | — | — | — | — | — | 0,2 | — | — | — | — |
| Talgfettalkohol× 5 Ethylenoxid | — | — | — | — | — | — | — | — | — | — | — | — | — | 0,2 | — | 0,05 | 0,1 |
| Verschweißung | 10 | 10 | 8 | 23 | 40 | 31 | 26 | 43 | 5 | 10 | — | 15 | — | 5 | 15 | 30 | 20 |
| Zellzahl Z/mm | 3 | 2,5 | 3,2 | 4,9 | 5,6 | 4,9 | 5,1 | 4,4 | 4,9 | 5,6 | — | 6,0 | — | 5,8 | 3,0 | 9,8 | 10,5 |
| Zellstruktur[1) | n.h | n.h | n.h | n.h | n.h | n.h | n.h | n.h | n.h | n.h | — | n.h | — | n.h | n.h | h | h |

[1) h: homogen/n.h: nicht homogen

[2) Ansatz koaguliert

TABELLE 2:
Polymerisationsversuche

| Zusatzstoff (%) | Versuch Nr. | | | | | | | | | | | | |
|---|---|---|---|---|---|---|---|---|---|---|---|---|---|
| | 18 | 19 | 20 | 21[2] | 22[3] | 23[2] | 24 | 25 | 26 | 27 | 28 | 29 | 30 |
| Abietinsäure | — | — | — | — | — | — | — | 0,01 | 0,01 | — | — | — | — |
| Hydroabietinsäure | — | — | — | — | — | — | — | — | — | — | — | — | — |
| Kolophonium nach Din 55 935 | — | — | — | — | — | — | 0,01 | — | — | — | 0,01 | — | — |
| technisches Hydro-abietinsäuregemisch | — | — | — | — | — | — | — | — | — | 0,01 | — | 0,01 | 0,01 |
| Talgfettalkohol× 25 Ethlenoxid | — | 0,01 | 0,05 | 0,01 | — | — | — | — | — | — | — | 0,01 | 0,02 |
| Talgfettalkohol× 11 Ethylenoxid | — | — | — | — | 0,05 | — | — | — | 0,05 | 0,05 | 0,05 | — | — |
| Talgfettalkohol× 50 Ethylenoxid | — | — | — | — | 0,05 | — | — | — | — | — | — | — | — |
| Talgfettalkohol× 5 Ethylenoxid | — | — | — | — | — | — | 0,05 | — | — | — | — | — | — |
| Verschweißung | 40 | 10 | 5 | — | 10 | — | 20 | 20 | 15 | 20 | 25 | 20 | 15 |
| Zellzahl Z/mm | 3,5 | 7 | 7,5 | — | 5,5 | — | 5,0 | 4,0 | 7,5 | 8,0 | 8,9 | 9,5 | 10,8 |
| Zellstruktur[1] | n.h | n.h | n.h | — | n.h | — | n.h | n.h | h. | h. | h. | h. | h. |

[1] h: homogen/n.h: nicht homogen
[2] Ansatz koaguliert
[3] deformierte Perlen

## Patentansprüche

1. Expandierbare Styrolpolymerisate, enthaltend
(a) 3 bis 15 Gew.% eines $C_3$—$C_8$-Kohlenwasserstoffs oder eines Halogenalkans als Triebmittels,
(b) 0,005 bis 0,3 Gew.% Harzsäuren, eines niederen Alkylesters der Harzsäuren oder (Hydro)abietyl-phthalat,
(c) 0,001 bis 0,1 Gew.% eines Polyoxyethylen-mooesters oder -monoethers, und
(d) gegebenenfalls übliche weitere Zusatzstoffe.
2. Styrolpolymerisat-Schaumstoffe der Diche 0,01 bis 0,05 g/cm³, enthaltend
(a) 0,005 bis 0,3 Gew.% Harzsäuren, eines niederen Alkylesters der Harzsäuren oder (Hydro)abietyl-phthalat,
(b) 0,001 bis 0,1 Gew.% eines Polyoxyethylen-monoesters oder -monoethers, und
(c) gegebenenfalls übliche Zusatzstoffe.

## Revendications

1. Polymères du styrène expansibles, qui contiennent
(a) de 3 à 15% en poids d'un hydrocarbure en $C_3$ à $C_8$, ou d'un halogénalcane, à titre d'agent porogène,
(b) de 0,005 à 0,3% en poids d'acides résiniques, d'un ester alkylique inférieur des acides résiniques, ou de phtalate d'(hydro)abiétyle,
(c) de 0,001 à 0,1% en poids d'un monoéther ou monoester de polyoxyéthylène et
(d) éventuellement d'autres additifs usuels.
2. Mousses ou matières plastiques cellulaires en polymères du styrène, d'une masse spécifique de 0,01 à 0,5 g/cm³, qui contiennent
(a) de 0,005 à 0,3% en poids d'acides résiniques, d'un ester alkylique inférieure des acides résiniques, ou de phtalate d'(hydro)abiétyle,
(b) de 0,001 à 0,1% en poids d'un monoéther ou monoester de polyoxyéthylène et
(c) éventuellement des additifs usuels.

**Claims**

1. An expandable styrene polymer, containing
(a) from 3 to 15% by weight of a $C_3$—$C_8$-hydrocarbon or of a haloalkane as a blowing agent,
(b) from 0.005 to 0.3% by weight of a resin acid, of a lower alkyl ester of the resin acid or (hydro)-abietyl phthalate and
(c) from 0.001 to 0.1% by weight of a polyoxyethylene monoester or monoether, with or without
(d) other conventional additives.

2. A styrene polymer foam having a density of from 0.01 to 0.05 g/cm$^3$ and containing
(a) from 0.005 to 0.3% by weight of a resin acid, of a lower alkyl ester of the resin acid or (hydro)-abietyl phthalate and
(b) from 0.001 to 0.1% by weight of a polyoxyethylene monoester or monoether, with or without
(c) conventional additives.